# EUROPÄISCHE PATENTSCHRIFT

(11) **EP 0 556 801 B1**
(45) Veröffentlichungstag und Bekanntmachung des Hinweises auf die Patenterteilung: **08.11.1995**
(21) Anmeldenummer: 93102479.8
(22) Anmeldetag: 17.02.1993
(51) Int. Cl.: B23Q 11/00, B23G 5/00, B23D 77/00, B23Q 1/00

(54) **Kühl/Schmiermittel-Zufuhrvorrichtung eines rotierenden Schaftwerkzeuges**
Coolant/lubricant feeding device for a rotating tool with a shaft
Dispositif d'alimentation d'un réfrigerant ou un lubrifiant pour un outil rotatif ayant un manchon

(30) Priorität: 19.02.1992 DE 4205007
(43) Veröffentlichungstag der Anmeldung: 25.08.1993
(73) Patentinhaber: Emuge-Werk Richard Glimpel, Fabrik für Präzisionswerkzeuge, vormals Moschkau & Glimpel, D-91207 Lauf (DE)
(72) Erfinder: Glimpel, Helmut, Dipl.-Ing., W-8560 Lauf/Pegnitz (DE); Löber, Ferdinand, W-8560 Lauf/Pegnitz (DE); Utz, Peter, W-8560 Lauf/Schönberg (DE)
(74) Vertreter: Böhme, Volker, Dipl.-Ing.

(56) Entgegenhaltungen:
- EP-A- 0 250 703
- EP-A- 0 430 536
- DE-A- 4 003 257
- DE-A- 4 019 427
- DE-A- 4 019 428
- FR-A- 2 239 849

## Beschreibung

Die Erfindung betrifft ein rotierendes Schaftwerkzeug mit einer Kühl/Schmiermittel-Zufuhrvorrichtung, bei dem ein Formkopf sich in Achsrichtung erstreckende Nuten aufweist und über einen Nutenauslaufbereich mit einem Schaft einstückig ist und bei dem ein sich im Schaft und auf den Nutenauslaufbereich erstreckender Hauptkanal sich endseitig in Zweigkanäle aufteilt, die jeweils zu einer der Nuten führen und in dieser münden, wobei eine Überdachung der Mündungen vorgesehen ist, gemäß Oberbegriff des Patentanspruchs 1.

Bei einer durch die Praxis bekannten Zufuhrvorrichtung sind die Zweigkanäle und deren Mündungen im Bereich des Formkopfes mit nur geringem Abstand von dessen vorderen Arbeitsende vorgesehen und sind die Mündungen von dem Werkstück überdacht, in dem der Formkopf arbeitet. Vorteilhafterweise wird das Kühl/Schmiermittel unmittelbar an das Arbeitsende gebracht und durch das umgebende Werkstück an einem freien radialen Wegspritzen aus den Nuten gehindert. Das Vorsehen der Zweikanäle in der Seele des Formkopfes liegen, deren Querschnitt wegen der Nuten relativ gering ist und die durch die Zweigkanäle erheblich geschwächt ist. Aufgrund der Schwächung durch die Zweigkanäle bricht der Formkopf des Schaftwerkzeuges in einer beachtlichen Zahl von Fällen beim Bearbeiten des Werkstückes.

Ein Schaftwerkzeug der eingangs genannten Art ist durch die DE-A-4 003 257 bekannt. Bei dem bekannten Schaftwerkzeug ist der Außendurchmesser der Büchse deutlich größer als der Außendurchmesser des Formkopfes und endet die Büchse mit beträchtlichem Abstand vor dem Formkopf. Da der Außendurchmesser der Büchse größer ist als der Arbeitsaußendurchmesser des Formkopfes, ist die Tiefe des Eintauchens des Formkopfes in das Werkstück auf den Abstand der Büchse vom Formkopf begrenzt. Auch kann das Kühl/Schmiermittel im Bereich dieses Abstandes, der nicht von der Büchse überdeckt ist, radial von dem rotierenden Werkzeug wegfliegen. Die Mündungen der zwei Kanäle müssen auch um diesen Abstand, d.h. die erwünschte Eintauchtiefe vom Formkopf entfernt sein.

Es ist auch ein rotierendes Werkzeug bekannt (EP-A-0 430 536), bei dem der Außendurchmesser einer Büchse, welche auf einem Werkzeugmantel sitzt und axiale Kanäle überdacht, kleiner ist als der Außendurchmesser des Formkopfes. Der Formkopf ist mit Schlitzen versehen, die in Schlitzauslaufbereiche übergehen und die Büchse erstreckt sich nur bis zu den Schlitzauslaufbereichen. Auch hier kann das Kühl/Schmiermittel in dem Bereich, der nicht von der Büchse überdeckt ist, radial von dem rotierenden Werkzeug wegfliegen.

Eine Aufgabe der Erfindung ist es daher, ein Schaftwerkzeug der eingangs genannten Art zu schaffen, bei dem die Mündungen der Zweigkanäle möglichst nahe dem Formkopf und dennoch in einer die Festigkeit des Schaftwerkzeuges nicht beeinträchtigenden Ferne vom Formkopf mit Überdachung vorgesehen sind. Das erfindungsgemäße Schaftwerkzeug ist, diese Aufgabe lösend, dadurch gekennzeichnet, daß der Außendurchmesser der Büchse kleiner als der Außendurchmesser des Formkopfes ist und die Büchse sich zum Formkopf hin erstreckt, so daß das Kühl/Schmiermittel von der Büchse (12) in die Formkopf-Nuten (6) strömt. Durch die vorgesehene Anordnung der Zweigkanäle und deren Mündungen ist die Bruchgefährdung des Kernes bzw. der Seele des Formkopfes und auch des Überganges zwischen Formkopf und Nutenauslaufbereich vermieden. Andererseits ist die Entfernung zwischen den Zweigkanal-Mündungen und dem vorderen Arbeitsende des Formkopfes ausreichend kurz, um eine brauchbare Kühl/Schmierung am Arbeitsende zu gewährleisten. Die Überdachung der Mündungen ist durch die zusätzliche Büchse gegeben, welche das als radiale Strahlen austretende Kühl/Schmiermittel in axialer Richtung umlenkt, so daß es über eine kurze Wegstrecke zu dem Formkopf, in die Nuten und entlang dem Grund der Nuten zu dem vorderen Arbeitsende strömen kann. Wenn der Formkopf in einen Sackloch arbeitet, dann wird das Kühl/Schmiermittel mit radialen Abstand von Grund der Nuten in diesen zurückströmen.

Die Büchse ist z.B. aus Stahl und an Schaft angeklebt. Besonders zweckmäßig und vorteilhaft ist es, wenn die Büchse aus einem Kunststoff besteht und wenn dabei die Büchse innen radiale Vorsprünge aufweist, die in Ausnehmungen des Schaftwerkzeuges federnd eingeschnappt radial einrasten. Dies ist eine einfach herstellbare und montierbare Büchse.

In der Regel verläuft der Hauptkanal mittig in Schaft. Der Hauptkanal kann sich auf nur einen Teil des Schaftes oder die ganze Länge des Schaftes erstrecken. Der Abstand der Mündungen vorn Formkopf ist so groß, daß der bruchgefährdete Übergang zwischen Formkopf und Nutenauslaufbereich nicht beeinflußt wird. Die Muten verlaufen z.B. geradlinig oder gewendelt. Unter Schaftwerkzeugen werden hier verstanden Gewindebohrer, -fräser und -furcher, aber auch allgemeine Fräser und Reibaalen. Die Büchse ist bis zum Formkopf geführt. Dabei ist zu beachten, daß dann, wenn der Außendurchmesser der Büchse größer ist, sie der Arbeiteaußendurchmesser des Formkopfes, die Büchse die Tiefe des Eintauchens des Formkopfes in das Werkstück begrenzt. Die Büchse ist eine Hülse bzw. ein Rohrabschnitt, d.h. in der Wanddicke relativ dünn und außen sowie innen mit in wesentlichen glatter Oberfläche. Wenn der Nutenauslaufbereich den gleichen Außendurchmesser wie der Schaft hat, dann ist er auf die Nuten begrenzt. Wenn sich an den Formkopf ein gegenüber dem Schaft dünnerer Hals anschließt, der nur teilweise die auslaufenden Nuten aufnimmt, dann ist mit Nutenauslaufbereich dieser Hals gemeint. Das Kühl/Schmiermittel kann von der Büchse auch entlang nutenfreiem Hals fließen, bis es in die Nuten eintritt. Die Büchse ist in der Regel nur am Schaft gehalten und abgestützt.

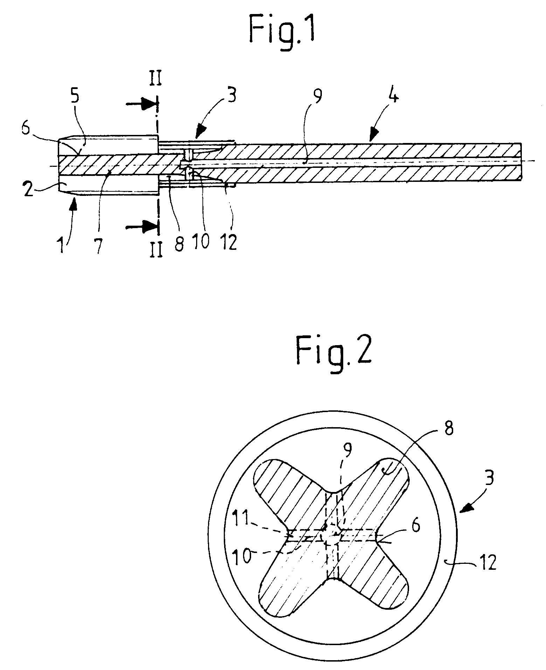

In der Zeichnung ist eine bevorzugte Ausführungsform der Erfindung dargestellt und zeigt
- Fig. 1: einen Längsschnitt einer Kühl/Schmiermittel-Zufuhrvorrichtung eines rotierenden Schaftwerkzeuges und
- Fig. 2: einen Schnitt gemäß Linie II-II in Fig. 1 in einen gegenüber Fig. 1 vergrößerten Maßstab.

Die Kühl/Schmiermittel-Zufuhrvorrichtung gemäß Zeichnung ist an einem Schaftwerkzeug vorgesehen, das als Gewindebohrer ausgebildet ist, der einen Formkopf 1 mit einem vorderen Arbeitsende 2 aufweist. An den Formkopf 1 schließt sich ein Nutenauslaufbereich 3 an, der in einen Schaut 4 übergeht. Der Außendurchmesser des Schaftes 4 ist hier kleiner als dar Außendurchmesser des Formkopfes 1. Der Formkopf 1 trägt sich in Längsrichtung erstreckende Formrücken 5, die durch Nuten 6 voneinander getrennt sind. Die Nuten 6 erstrecken sich bei geringerer Tiefe auch auf den Nutenauslaufbereich 3, was fertigungstechnisch bedingt ist. Im Bereich des Formkopfes 1 bleibt mittig zwischen den Nuten 6 eine Seele 7. Im Nutenauslaufbereich sind die auslaufenden Nuten 6 durch Rücken 8 getrennt, deren radiale Abmessung kleiner ist als der Radius des Schaftes 4.

Mittig und axial verläuft im Schaft 4 ein Hauptkanal 9, der im Nutenauslaufbereich 3 endet. Von dem Hauptkanal 9 geht im Nutenauslaufbereich 3 pro Nut 6 ein Zweigkanal 10 ab, dessen Mündung 11 am Grund der Nut liegt. Auf den Schaft 3 ist eine Büchse 12 aus Kunststoff geschoben, die sich zum Vorteil 1 hin erstreckt und die Mündungen 11 überdacht, d.h. radialen Abstand von den Mündungen hat. Kühl/Schmiermittel, das über den Hauptkanal 9 und die Zweigkanäle 10 zugeführt wird, tritt aus den Mündungen 11 im Wirkungsbereich der Büchse 12 aus und wird von dieser in Richtung zum Formkopf 1 gelenkt.

Generell gilt für Grundloch- und Durchgangslochgewinde folgendes:
Bei Werzeugen mit innerer Kühlschmiermittelzufuhr mit Austritt im Ausschnittbereich in den Nuten oder stirnseitig im Werkzeug ist die Kühlschmierwirkung immer erst nach Erreichen einer gewissen Eintauchtiefe in das Werkstück gewährleistet, da erst dann durch Zurückfließen des Kühlschmiermittels von der Werkstückwand eine ausreichende Benetzung der Werkzeugoberfläche gewährleistet ist. Bei den ersten Werkzeugumdrehungen im Werkstück ist oft keine ausreichende Kühlschmierwirkung vorhanden, was zu vorzeitigem Werkzeugverschleiß führt.

Die Umlenkung des radial austretenden Kühlschmiermittelstrahls an der Büches in axiale Richtung führt trotz der schnittgeschwindigkeitsabhängigen Fliehkräfte zu einer konstanten Benetzung bzw. Ummantelung des Schneidteils mit dem Külschmiermittel. Im Moment des Anschneidens (des Eintretens des Werkzeuges in das Werkstück) ist deshalb eine gesicherte Kühlschmiermittelwirkung garantiert. Dies ist ein wesentlicher Vorteil dieser Ausführung.

Der Rückfluß des Kühlschmiermittels bei Durchgangslochgewinde spielt keine Rolle. Bei Grundlochgewinde wird der Rückfluß des Kühlschmiermittels durch die aufgeschobene Büchse nicht oder nur unwesentlich behindert, da zwischen Büchse und Bohrung sowieso ausreichend Raum für den Späneaustritt bleiben muß.

## Patentansprüche

1. Rotierendes Schaftwerkzeug mit einer Kühl/Schmiermittel-Zufuhrvorrichtung,
bei dem ein Formkopf (1) sich in Achsrichtung erstreckende Nuten (6) aufweist und über einen Nutenauslaufbereich (3) mit einem Schaft (4) einstückig ist,
bei dem ein sich im Schaft (4) und auf den Nutenauslaufbereich (3) erstreckender Hauptkanal (9) sich endseitig in Zweigkanäle (10) aufteilt, die jeweils zu einer der Nuten führen und in dieser münden, wobei eine Überdachung (12) der Mündungen (11) vorgesehen ist, und
bei dem die Zweigkanäle (10) und deren Mündungen (11) mit Abstand vom Formkopf (1) im Nutenauslaufbereich (3) vorgesehen sind und eine auf dem Schaft (4) festsitzende Büchse (12) den Nutenauslaufbereich (3) und die Mündungen (11) überdacht und in Richtung zum Formkopf (1) hin offen ist,
**dadurch gekennzeichnet**,
daß der Außendurchmesser der Büchse (12) kleiner als der Außendurchmesser des Formkopfes (1) ist und die Büchse (12) sich zum Formkopf (1) hin erstreckt, sodaß das Kühl/Schmiermittel von der Büchse (12) in die Formkopf-Nuten (6) strömt.

2. Schaftwerkzeug nach Anspruch 1, **dadurch gekennzeichnet**, daß die Büchse (12) aus einem Kunststoff besteht.

3. Schaftwerkzeug nach Anspruch 2, **dadurch gekennzeichnet**, daß die Büchse innen radiale Vorsprünge aufweist, die in Ausnehmungen des Schaftwerkzeuges federnd eingeschnappt radial einrasten.

## Claims

1. A rotating shank-type tool with a coolant/lubricant supply device, in which a shaping head (1) has grooves (6) extending axially and is formed as a single part with a shank (4) via a groove discharge region (3), and a principal channel (9) extending in the shank (4) and on the groove discharge region (3) is divided at its end into subsidiary channels (10) which each lead to one of the grooves and open into the same, a covering (12) being provided for the openings (11), and the subsidiary channels (10) and the openings (11) thereof are provided at a distance from the shaping head (1) in the groove discharge region (3), and a sleeve (12) positioned securely on the shank (4) covers the groove discharge region (3) and the openings (11) and is open in the direction of the shaping head (1), **characterized in that** the outer diameter of the sleeve (12) is smaller than the outer diameter of the shaping head (1), and the sleeve (12) extends towards the shaping head (1) in such a way that the coolant/lubricant flows from the sleeve (12) into the shaping-head grooves (6).

2. A shank-type tool in accordance with claim 1, **characterized in that** the sleeve (12) is made from plastics.

3. A shank-type tool in accordance with claim 2, **characterized in that** the sleeve has internal radial projections which click radially into recesses in the shank-type tool in a resiliently snapped-in manner.

## Revendications

1. Outil rotatif à tige, comportant un dispositif d'alimentation en réfrigérant/lubrifiant,
dans lequel une tête de formage (1) présente des gorges (6) s'étendant en direction axiale, et est réalisée via une région de terminaison de gorges (3) en une seule pièce avec une tige (4),
dans lequel un canal principal (9), qui s'étend dans la tige (4) et sur la région de terminaison des gorges (3), se divise à l'extrémité en embranchements de canaux (10) qui mènent chacun à l'une des gorges, et qui débouchent dans celle-ci, où il est prévu un recouvrement (12) des embouchures (11), et
dans lequel les embranchements de canaux (10) et leurs embouchures (11) sont prévus à distance par rapport à la tête de formage (1) dans la région de terminaison des gorges (3), et une douille (12) fixée sur la tige (4) recouvre la région de terminaison des gorges (3) et les embouchures (12), et est ouverte en direction de la tête de formage (1),
caractérisé en ce que le diamètre extérieur de la douille (12) est inférieur au diamètre extérieur de la tête de formage (1), et en ce que la douille (12) s'étend jusqu'à la tête de formage (1), de sorte que le réfrigérant/lubrifiant s'écoule depuis la douille (12) dans les gorges (6) de la tête de formage.

2. Outil à tige selon la revendication 1, caractérisé en ce que la douille (12) est constituée en une matière plastique.

3. Outil à tige selon la revendication 2, caractérisé en ce que la douille présente à l'intérieur des saillies radiales qui s'enclenchent radialement par encliquetage élastique dans des évidements de l'outil à tige.
